# EUROPÄISCHE PATENTSCHRIFT

(11) **EP 3 808 875 B1**
(45) Veröffentlichungstag und Bekanntmachung des Hinweises auf die Patenterteilung: **25.09.2024**
(21) Anmeldenummer: 20199539.6
(22) Anmeldetag: 01.10.2020
(51) Int. Cl.: C23F 11/18, C02F 5/08, C02F 1/68, E03B 7/00

(54) **INHIBITOREN-LÖSUNG ZUM KORROSIONSSCHUTZ FÜR WASSERFÜHRENDE LEITUNGEN UND INSTALLATIONSSYSTEME**
ANTI-CORROSION INHIBITOR SOLUTION FOR WATER-CARRYING PIPES AND INSTALLATION SYSTEMS
SOLUTION D'INHIBITEUR DESTINÉ À LA PROTECTION CONTRE LA CORROSION DES CONDUITES DE TRANSPORT D'EAU ET DES SYSTÈMES D'INSTALLATION

(30) Priorität: 01.10.2019 DE 102019126497
(43) Veröffentlichungstag der Anmeldung: 21.04.2021
(73) Patentinhaber: BWT AG, 5310 Mondsee (AT)
(72) Erfinder: Johann, Jürgen, 69226 Nußloch (DE); Schmidt, Thomas, 68519 Viernheim (DE); Becker, Daniel, 69493 Hirschberg (DE)
(74) Vertreter: Friderichs, Gunther

(56) Entgegenhaltungen:
- EP-A1- 0 102 587
- EP-A1- 0 860 517
- CN-A- 107 059 017

## Beschreibung

### Gebiet der Erfindung

Die Erfindung betrifft eine Inhibitoren-Lösung, welche wasserführenden Leitungen und Installationssystemen als Korrosionsschutzmittel sowohl zur Sanierung als auch zur Vorsorge zugesetzt werden kann. Durch die Inhibitoren-Lösung wird eine silikat- und phosphathaltige Schicht auf den Innenwänden von wasserführenden Leitungen und Installationen gebildet, die die Korrosion minimiert.

### Hintergrund der Erfindung

Die Verwendung von silikat- und phosphathaltigen Inhibitorenlösungen für wasserführende Systeme ist bekannt. So kann mit guter Wirksamkeit eine silikathaltige Schutzschicht auf Metallrohren, beispielsweise in Trinkwasserverteilungsnetzen, insbesondere in Hausinstallationen, aus verzinktem Stahl, unlegiertem Stahl oder niedrig legiertem Stahl gebildet werden.

Problematisch ist allerdings, dass das Vorhandensein von Phosphat, insbesondere größeren Mengen von Phosphat, im Trinkwasser unerwünscht ist. So ist Phosphat ein Nährstoff für Mikroorganismen, kann also eine Verkeimung des Wassers begünstigen.

Problematisch ist ebenso eine gebrauchsfertige und auch bei niedrigen Temperaturen lagerstabile Inhibitorlösung herzustellen.

Die Offenlegungsschrift DE 10 2014 003 770 A1 sieht vor, dass zur Verbesserung der Wirksamkeit der Inhibitoren-Lösung diese unmittelbar vor der Verwendung thermisch aktiviert wird. Dieses Vorgehen ist allerdings aufwendig.

Die Offenlegungsschrift EP 1 780 310 A2 beschreibt ein Verfahren, bei welchem aus zwei Lösungen unmittelbar vor der Verwendung eine dritte Dosierlösung hergestellt wird. Auch diese Vorgehensweise ist aufwendig.

Korrosionsschutzlösungen sind aus den Dokumenten CN 107 059 017 A, EP 0 102 587 A1 und EP 0 860 517 A1 bekannt.

### Aufgabe der Erfindung

Der Erfindung liegt demgegenüber die Aufgabe zugrunde, eine einfach handhabbare Inhibitoren-Lösung bereitzustellen, welche eine maximale Wirksamkeit bei möglichst geringer Phosphatabgabe an das Wasser hat. Die Inhibitoren-Lösung soll lange lagerfähig und unmittelbar verwendbar sein und keine potenziell schädlichen Substanzen enthalten.

### Zusammenfassung der Erfindung

Die Aufgabe der Erfindung wird bereits durch eine Inhibitoren-Lösung zum Korrosionsschutz für wasserführende Leitungen und Installationssysteme nach Anspruch 1 gelöst.

Bevorzugte Ausführungsformen und Weiterbildungen der Erfindung sind dem Gegenstand der abhängigen Ansprüche, der Beschreibung sowie den Zeichnungen zu entnehmen.

Die Erfindung betrifft eine Inhibitoren-Lösung zum Korrosionsschutz für wasserführende Leitungen und Installationssysteme.

Insbesondere betrifft die Erfindung eine Inhibitoren-Lösung, welche für Trinkwasserleitungen in Trinkwasserverteilungsnetzen verwendet wird. Die Inhibitoren-Lösung kann insbesondere für Hausinstallationen aus verzinktem Stahl, unlegiertem Stahl und/oder niedrig legiertem Stahl, also mit einem Massenanteil der Legierungskomponenten von maximal 5 %, verwendet werden.

Es ist aber auch denkbar, die Inhibitoren-Lösung für geschlossene Systeme, wie beispielsweise Kühl- und Heizsysteme, zu verwenden.

Die Inhibitoren-Lösung umfasst, insbesondere besteht aus, einer wässrigen Lösung mit Natriumsilikat, Natriumpolyphosphat und Trinatriumphosphat.

Neben Natriumsilikat sind also zwei Phosphatkomponenten, nämlich Trinatriumphosphat und ein polymeres, insbesondere als Kondensationsprodukt von Trinatriumphosphat ausgebildetes Phosphat wirksamer Bestandteil der Inhibitor-Lösung.

Die kettenförmigen Polymere werden gemeinhin als Polyphosphat bezeichnet. Im Sinne der Erfindung ist zumindest ein Polyphosphat mit der chemischen Formel Naₙ₊₂(PₙO₃ₙ₊₁) oder Naₙ(H₂PₙO₃ₙ₊₁), wobei der Kondensationsgrad n mindestens 4 beträgt zusätzlich zum Trinatriumphosphat vorhanden.

Dabei liegt Trinatriumphosphat im Verhältnis zu Natriumpolyphosphat in einem Massenverhältnis von 1,5 bis 6,0 vor. Die Massenverhältnisse im Sinne der Erfindung von Silikat und Phosphat sind jeweils als PO₄ bzw. SiO₂ berechnet. Natriumsilikat liegt zu der Summe der Phosphate, also Trinatriumphosphat sowie Natriumpolyphosphat in einem Massenverhältnis von mehr als 2,0, vorzugsweise mehr als 3,0 vor.

Es hat sich herausgestellt, dass mit dieser Zusammensetzung eine optimale Wirkung bei gleichzeitig niedrigen Phosphatanteil erreicht werden kann.

Die Natriumverbindungen scheinen gegenüber der Verwendung von Phosphaten oder Silikaten mit anderen Kationen eine verbesserte Wirksamkeit nach sich zu ziehen. Gleichzeitig wird als Kation lediglich unbedenkliches Natrium an das Wasser abgegeben.

Es hat sich herausgestellt, dass bereits durch den Zusatz einer geringen Menge von Natriumpolyphosphat eine Wasserschönung mit hoher Wirksamkeit erzielt werden kann. Dies ist insbesondere zu Beginn einer Sanierungsphase wichtig, da hier noch hohe Eisenkonzentrationen im Wasser vorliegen. Aufgrund der Komplexierung von Eisenionen verschwinden gelb bis rostbraune Verfärbungen des Wassers bereits unmittelbar mit dem Beginn der Verwendung der Inhibitoren-Lösung.

Weiter scheint das Polyphosphat einen Transport der anderen Korrosionsschutzkomponenten, insbesondere des Trinatriumphosphat, in weit von der Dosierstelle entfernte Bereiche des Installationssystems zu bewirken.

Das Polyphosphat scheint zudem zu bewirken, dass das Trinatriumphosphat nicht bereits kurz nach dem Zudosieren mit den im Wasser vorhandenen Kalzium- und Magnesiumionen reagiert und so bereits unmittelbar nach der Zudosierung ausfällt.

Das Polyphosphat bewirkt bereits in geringen Mengen eine Härtestabilisierung des Wassers.

Durch die Erfindung kann so eine Inhibitoren-Lösung mit maximaler Wirksamkeit, aber niedriger Phosphatkonzentration im Trinkwasser, bereitgestellt werden.

Insbesondere konnte die Gefahr der Bildung von schwarzen Biofilmen an den Auslaufarmaturen deutlich reduziert werden. Bei einer bevorzugten Ausführungsform der Erfindung beträgt das Massenverhältnis von Trinatriumphosphat zu Natriumpolyphosphat zwischen 1,5 und 4,0, bevorzugt zwischen 2,0 und 3,0.

Das Massenverhältnis von Silikat zu Phosphat, also der Summe aller Phosphate, liegt vorzugsweise zwischen 2,0 und 10,0, besonders bevorzugt zwischen 3,0 und 6,0 und ganz besonders bevorzugt zwischen 4,0 und 5,0.

Gemäß einer bevorzugten Ausführungsform der Erfindung beträgt das Massenverhältnis von Natriumsilikat zu Trinatriumphosphat 3,0 bis 10,0, vorzugsweise 5,0 bis 8,0.

Die Inhibitoren-Lösung ist vorzugsweise als Konzentrat mit einem Massenanteil an Phosphat und Silikat von mehr als 6 %, vorzugsweise mehr als 10 %, ausgebildet. So müssen nur sehr geringe Mengen der Lösung dem Wasser zugegeben werden.

Als Natriumpolyphosphat enthält die Lösung ein Natriumpolyphosphat mit einer mittleren Kettenlänge von 4 bis 20. Vorzugsweise beträgt die mittlere Kettenlänge 10 bis 20, besonders bevorzugt 14 bis 17. Diese hat eine gute Löslichkeit und trägt gleichzeitig bereits in geringer Menge zu einer hohen Korrosionsschutzwirkung bei.

Die Kettenlänge kann z.B. über ein P-NMR-Verfahren bestimmt werden, bei welchem das das Polyphosphat in Deuteriumoxid gelöst wird und während oder kurz nach dem Lösevorgang, d.h. bevor eine merkliche Hydrolyse einsetzt und das Ergebnis verfälschen könnte, die Resonanzsignale der verschiedenen Phosphatgruppen aufgenommen werden.

Weiter kann die Lösung insbesondere Natriumhexametaphosphat enthalten.

Der Lösung sind vorzugsweise keine weiteren Silikate und/oder Phosphate oder andere Korrosionsschutzinhibitoren zugesetzt.

Die Lösung enthält ein Natriumsilikat mit einem Molverhältnis von SiO₂ zu Na₂O von maximal 5.

Die Erfindung betrifft des Weiteren ein Verfahren zur Behandlung, insbesondere zur Sanierung eines Wasserinstallationssystems.

Dabei wird vorstehend beschriebene Inhibitoren-Lösung mittels einer Dosiereinrichtung, insbesondere mittels einer Dosierpumpe, dem Wasser zugegeben und das Wasser wird auf eine Phosphatkonzentration von 0,2 bis 3,0 g/m³, vorzugsweise von 0,3 bis 1,8 g/m³ eingestellt.

Weiter wird das Wasser auf eine Silikatkonzentration von 0,5 bis 15 g/m³, vorzugsweise von 1 bis 12 g/m³, eingestellt.

Gemäß einer Ausführungsform der Erfindung wird das Verfahren für die Sanierung eines Wasserinstallationssystems verwendet, wobei die Inhibitoren-Lösung als Sanierungsdosis in einer höheren Menge, insbesondere in einer mindestens zweifach höheren Menge als in einer anschließenden Erhaltungsdosis, zugeführt wird.

In einer Sanierungsphase werden insbesondere 50 bis 100 ml/m³ und in einer anschließenden Erhaltungsphase 10 bis 49 ml/m³ der Inhibitoren-Lösung in das Wasser zudosiert.

Bei der Erhaltungsdosierung kann die Phosphatkonzentration auf 0,3 bis 1,3 g/m³, vorzugsweise auf 0,6 bis 0,7 g/m³, eingestellt werden. Die Bildung von schwarz gefärbten Biofilmen kann so recht sicher verhindert werden.

### Kurzbeschreibung der Zeichnungen

Der Gegenstand der Erfindung soll im Folgenden bezugnehmend auf ein Ausführungsbeispiel näher erläutert werden.
Fig. 1 ist eine schematische Ansicht eines Wasserinstallationssystems, welches mit einer erfindungsgemäßen Inhibitoren-Lösung behandelt wird.
Fig. 2 ist ein Flussdiagramm eines Ausführungsbeispiels der Erfindung.
Fig. 3 ist eine Tabelle, welche die Wirkung der erfindungsgemäßen Inhibitorenlösung zeigt.

### Detaillierte Beschreibung der Zeichnungen

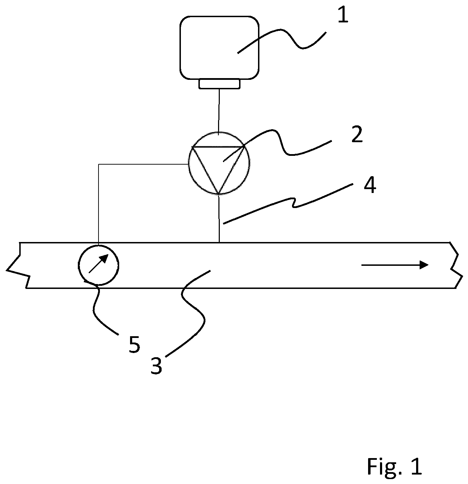

Fig. 1 zeigt in einer schematischen Ansicht ein Wasserinstallationssystem, welches mit einer erfindungsgemäßen Inhibitoren-Lösung behandelt wird.

Das Wasserinstallationssystem umfasst zumindest eine Wasserleitung 3, durch welche Wasser, insbesondere Trinkwasser, fließt.

Während Wasser fließt, wird mittels der Messeinrichtung 5 der Volumenstrom des Wassers gemessen. Basierend darauf dosiert die Dosierpumpe 2 über einen Zulauf (Impfstelle) 4 Inhibitoren-Lösung aus dem Behälter 1 in das Leitungssystem. Aufbau und Funktion derartiger Dosierpumpen sind dem Fachmann bekannt.

Die Inhibitoren-Lösung ist unmittelbar verwendbar und kann, ohne dass diese vorher erwärmt wird, zudosiert werden. Insbesondere beträgt die Temperatur der Inhibitoren-Lösung beim Zudosieren unter 30 °C.

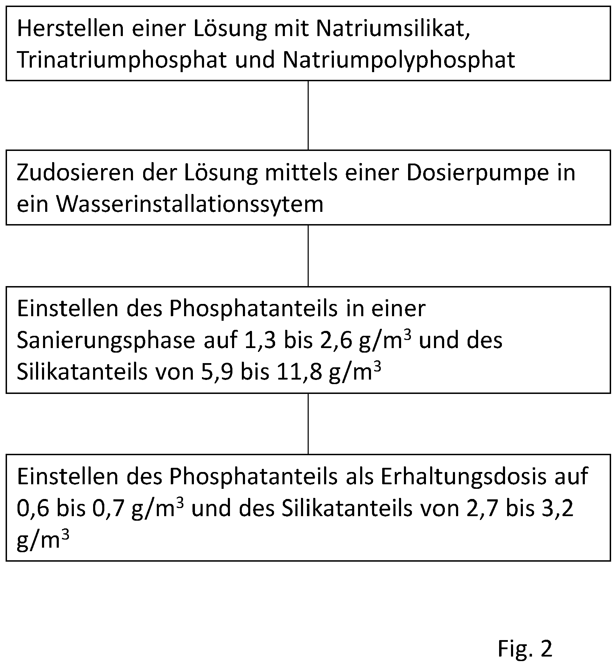

Fig. 2 zeigt in einem Flussdiagramm die Schritte gemäß einem Ausführungsbeispiel der Erfindung zum Sanieren eines Installationssystems.

Als Inhibitoren-Lösung wird eine Lösung mit Natriumsilikat, Trinatriumphosphat und Natriumpolyphosphat hergestellt.

Die Lösung ist als Konzentrat ausgebildet und enthält Silikat in einem Massenanteil von 9 bis 11 %, berechnet als SiO₂. Die Lösung enthält Trinatriumphosphat in einem Massenanteil von 1,2 bis 1,8 %, berechnet als PO₄ sowie Polyphosphat in einem Massenanteil von 0,5 bis 0,7 %, berechnet als PO₄.

Zur Herstellung der Lösung kann Natriumsilikat in Wasser in einem Mol-Verhältnis von SiO₂ zu Na₂O von 3,4 verwendet werden.

Das Massenverhältnis von SiO₂ zu der Summe der Phosphate beträgt vorzugsweise 4,0 : 1 bis 5,0 : 1.

Insbesondere kann das Gewichtsverhältnis SiO₂: Ortho-PO₄: Poly-PO₄ 16 : 2,5 : 1, +/- einer Toleranz von 10% für jede Komponente, betragen.

Das Gewichtsverhältnis der Korrosions-inhibitierenden Bestandteile SiO₂ : Ortho-PO₄ beträgt vorzugsweise zwischen 6,0 : 1 bis 7,0 : 1.

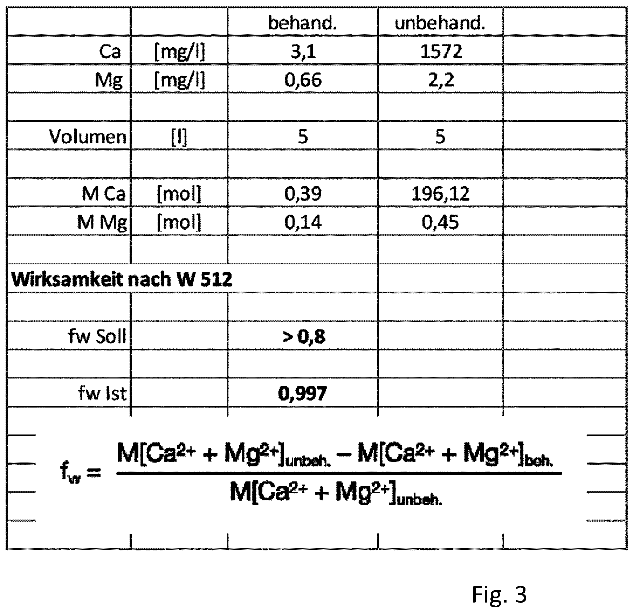

Fig. 3 zeigt die Ergebnisse eines Versuchs zur Prüfung der Wirksamkeit der erfindungsgemäßen Inhibitoren-Lösung.

Zur Beurteilung der Wirksamkeit zur Verminderung von Steinbildung wurden zwei Versuchsstrecken gemäß Versuchsaufbau nach DVGW Arbeitsblatt W 512 "Verfahren zur Beurteilung der Wirksamkeit von Wasserbehandlungsanlagen zur Verminderung von Steinbildung" betrieben. Durchflüsse und Stagnationszeiten entsprechen Vorgaben aus W 512. Das Versuchswasser wurde auf 70 °C erwärmt.

Zum Versuchsende nach 36 Tagen wurden die Ablagerungen an den Heizwendel sowie Einbauten mittels Salpetersäure aufgelöst und in der Lösung Calcium und Magnesium bestimmt.

Eine ausreichende Wirksamkeit der Wasserbehandlungsanlage im Sinne des DVGW Arbeitsblatt W 512 "Verfahren zur Beurteilung der Wirksamkeit von Wasserbehandlungsanlagen zur Verminderung von Steinbildung" ist dann gegeben, wenn der Wirksamkeitsfaktor fw ≥ 0,8 ist.

Das Versuchswasser hatte folgende Zusammensetzung:
pH-Wert 7,2, Calcium 147 mg/l, Magnesium 26 mg/l, Σ-Erdalkalien 4,7 mmol/l, KS4,3 6,0 mmol/l,
Strecke 1: Dosierung von 50 ml/m³ Inhibitoren-Lösung.
Strecke 2: Blindstrecke ohne Dosierung

Es hat sich eine erstaunlich hohe Wirksamkeit gezeigt. Im Vergleich von behandelter zur unbehandelten Strecke konnte die Steinbildung nach 36 Versuchstagen um 99,7 % vermindert werden. Auch optisch war nach Durchführung des Versuchs auf den Heizwendeln der Strecke 1 keine sichtbare Steinbildung zu erkennen, wohingegen die Heizwendel der Blindstrecke vollständig mit einer dicken Kruste belegt sind.

Durch die Erfindung konnte eine einfach verwendbare Inhibitoren-Lösung zum Korrosionsschutz in wasserführenden Systemen bereitgestellt werden, welche bei geringem Phosphatanteil eine maximale Wirksamkeit hat.

## Patentansprüche

1. Inhibitoren-Lösung zum Korrosionsschutz für wasserführende Leitungen und Installationssysteme, umfassend eine wässerige Lösung mit Natriumsilikat, Natriumpolyphosphat und Trinatriumphosphat, wobei Trinatriumphosphat zu Natriumpolyphosphat in einem Massenverhältnis von 1,5 bis 6,0 vorliegt, und wobei Natriumsilikat zu der Summe aus Trinatriumphosphat und Natriumpolyphosphat in einem Massenverhältnis von mehr als 2,0 vorliegt,wobei die Lösung Natriumpolyphosphat mit einer mittlere Kettenlänge von 4 bis 20 enthält, und wobei die Lösung ein Natriumsilikat enthält mit einem Molverhältnis von SiO₂ zu Na₂O von maximal 5.

2. Inhibitoren-Lösung nach dem vorstehenden Anspruch, **dadurch gekennzeichnet, dass** das Massenverhältnis von Trinatriumphosphat zu Natriumpolyphosphat zwischen 1,5 und 4,0, bevorzugt zwischen 2,0 und 3,0, liegt.

3. Inhibitoren-Lösung nach Anspruch 1, **dadurch gekennzeichnet, dass** Natriumsilikat zu der Summe aus Trinatriumphosphat und Natriumpolyphosphat in einem Massenverhältnis von mehr als 3,0 vorliegt,

4. Inhibitoren-Lösung nach einem der vorstehenden Ansprüche, **dadurch gekennzeichnet, dass** Massenverhältnis von Silikat zu Phosphat zwischen 2,0 und 10,0, vorzugsweise zwischen 3,0 und 6,0, besonders bevorzugt zwischen 4,0 und 5,0, liegt.

5. Inhibitoren-Lösung nach einem der vorstehenden Ansprüche, **dadurch gekennzeichnet, dass** das Massenverhältnis von Natriumsilikat zu Trinatriumphosphat zwischen 3,0 und 10,0, vorzugsweise zwischen 5,0 und 8,0 liegt.

6. Inhibitoren-Lösung nach einem der vorstehenden Ansprüche, **dadurch gekennzeichnet, dass** die Inhibitoren-Lösung als Konzentrat mit einem Massenanteil an Phosphat und Silikat von mehr als 6 %, vorzugsweise mehr als 10 % vorliegt.

7. Inhibitoren-Lösung nach einem der vorstehenden Ansprüche, **dadurch gekennzeichnet, dass** die Lösung Natriumpolyphosphat mit einer mittlere Kettenlänge 10 bis 20, bevorzugt von 14 bis 17, enthält.

8. Inhibitoren-Lösung nach einem der vorstehenden Ansprüche, **dadurch gekennzeichnet, dass** die Lösung Natriumhexametaphosphat enthält.

9. Verfahren zur Behandlung, insbesondere Sanierung, eines Wasserinstallationssystems, wobei eine Inhibitoren-Lösung nach einem der vorstehenden Ansprüche mittels einer Dosiereinrichtung dem Wasser zugegeben wird und wobei das Wasser auf eine Phosphatkonzentration von 0,2 bis 3,0 g/m³, vorzugsweise von 0,3 bis 1,8 g/m³, und auf eine Silikatkonzentration von 0,5 bis 15 g/m³, vorzugsweise von 1 bis 12 g/m³, eingestellt wird.

10. Verfahren nach dem vorstehenden Anspruch, **dadurch gekennzeichnet, dass** das Wasser mit einer Erhaltungsdosierung für das Wasserinstallationssystem behandelt wird, wobei die Phosphatkonzentration auf 0,3 bis 1,3 g/m³, vorzugsweise auf 0,6 bis 0,7 g/m³ eingestellt wird.

11. Verfahren nach einem der vorstehenden Ansprüche, **dadurch gekennzeichnet, dass** eine Installation, insbesondere eine Rohrleitung aus einem verzinkten, niedrig- oder unlegiertem Eisenwerkstoff behandelt wird.

## Claims

1. An anti-corrosion inhibitor solution for water-bearing conduits and installation systems, comprising an aqueous solution with sodium silicate, sodium polyphosphate and trisodium phosphate, wherein trisodium phosphate to sodium polyphosphate is present in a mass ratio of 1.5 to 6.0, and wherein sodium silicate to the sum of trisodium phosphate and sodium polyphosphate is present in a mass ratio of more than 2.0, wherein the solution contains sodium polyphosphate with an average chain length of 4 to 20, and wherein the solution contains a sodium silicate with a molar ratio of SiO₂ to Na₂O of maximally 5.

2. The inhibitor solution according to the preceding claim, **characterized in that** the mass ratio of trisodium phosphate to sodium polyphosphate is between 1.5 and 4.0, preferably between 2.0 and 3.0.

3. The inhibitor solution according to claim 1, **characterized in that** sodium silicate to the sum of trisodium phosphate and sodium polyphosphate is present in a mass ratio of more than 3.0.

4. The inhibitor solution according to any one of the preceding claims, **characterized in that** the mass ratio of silicate to phosphate is between 2.0 and 10.0, preferably between 3.0 and 6.0, particularly preferably between 4.0 and 5.0.

5. The inhibitor solution according to any one of the preceding claims, **characterized in that** the mass ratio of sodium silicate to trisodium phosphate is between 3.0 and 10.0, preferably between 5.0 and 8.0.

6. The inhibitor solution according to any one of the preceding claims, **characterized in that** the inhibitor solution is present as concentrate with a percent by weight of phosphate and silicate of more than 60, preferably more than 10%.

7. The inhibitor solution according to any one of the preceding claims, **characterized in that** the solution contains sodium polyphosphate with an average chain length of 10 to 20, preferably of 14 to 17.

8. The inhibitor solution according to any one of the preceding claims, **characterized in that** the solution contains sodium hexametaphosphate.

9. A method for treating, in particular remediating, a water installation system, wherein an inhibitor solution according to any one of the preceding claims is added to the water by means of a dosing unit and wherein the water is set to a phosphate concentration of 0.2 to 3.0 g/m³, preferably of 0.3 to 1.8 g/m³, and to a silicate concentration of 0.5 to 15 g/m³, preferably of 1 to 12 g/m³.

10. The method according to the preceding claim, **characterized in that** the water is treated with a maintenance dose for the water installation system, wherein the phosphate concentration is set to 0.3 to 1.3 g/m³, preferably to 0.6 to 0.7 g/m³.

11. The method according to any one of the preceding claims, **characterized in that** an installation, in particular a pipeline of a galvanized, low-alloyed or unalloyed ferrous material is treated.

## Revendications

1. Solution inhibitrice pour la protection contre la corrosion des conduites d'eau et des systèmes de plomberie, comprenant une solution aqueuse contenant du silicate de sodium, du polyphosphate de sodium et du phosphate trisodique, le phosphate trisodique étant présent dans un rapport massique de 1,5 à 6,0 par rapport au polyphosphate de sodium, et le silicate de sodium étant présent dans un rapport massique supérieur à 2,0 par rapport à la somme du phosphate trisodique et du polyphosphate de sodium, la solution contenant du polyphosphate de sodium ayant une longueur de chaîne moyenne de 4 à 20, et la solution contenant un silicate de sodium ayant un rapport molaire SiO2 / Na2O de 5 maximum.

2. Solution inhibitrice selon la revendication précédente, **caractérisée en ce que** le rapport massique phosphate trisodique / polyphosphate de sodium est compris entre 1,5 et 4,0, préférablement entre 2,0 et 3,0.

3. Solution inhibitrice selon la revendication 1, **caractérisée en ce que** le silicate de sodium est présent dans un rapport massique supérieur à 3,0 par rapport à la somme du phosphate trisodique et du polyphosphate de sodium.

4. Solution inhibitrice selon l'une des revendications précédentes, **caractérisée en ce que** le rapport massique silicate / phosphate est compris entre 2,0 et 10,0, préférablement entre 3,0 et 6,0, plus préférablement entre 4,0 et 5,0.

5. Solution inhibitrice selon l'une des revendications précédentes, **caractérisée en ce que** le rapport massique silicate de sodium / phosphate trisodique est compris entre 3,0 et 10,0, préférablement entre 5,0 et 8,0.

6. Solution inhibitrice selon l'une des revendications précédentes, **caractérisée en ce que** la solution inhibitrice se présente sous la forme d'un concentré avec un taux massique de phosphate et de silicate supérieur à 6 %, préférablement supérieur à 10 %.

7. Solution inhibitrice selon l'une des revendications précédentes, **caractérisée en ce que** la solution contient du polyphosphate de sodium ayant une longueur de chaîne moyenne de 10 à 20, préférablement de 14 à 17.

8. Solution inhibitrice selon l'une des revendications précédentes, **caractérisée en ce que** la solution contient de l'hexamétaphosphate de sodium.

9. Procédé de traitement, en particulier de rénovation, d'un système d'installation d'eau, une solution inhibitrice selon l'une des revendications précédentes étant ajoutée à l'eau au moyen d'un dispositif de dosage et l'eau étant ajustée à une concentration en phosphate de 0,2 à 3,0 g/m³, préférablement de 0,3 à 1,8 g/m³, et à une concentration en silicate de 0,5 à 15 g/m³, préférablement de 1 à 12 g/m³.

10. Procédé selon la revendication précédente, **caractérisé en ce que** l'eau est traitée avec un dosage de maintien pour le système d'installation d'eau, la concentration en phosphate étant ajustée entre 0,3 et 1,3 g/m³, préférablement entre 0,6 et 0,7 g/m³.

11. Procédé selon l'une des revendications précédentes, **caractérisé par** le traitement d'une installation, notamment d'une canalisation dans un matériau ferreux galvanisé, faiblement ou non allié.
